# EUROPÄISCHE PATENTSCHRIFT

(11) **EP 0 827 853 B1**
(45) Veröffentlichungstag und Bekanntmachung des Hinweises auf die Patenterteilung: **04.12.2002**
(21) Anmeldenummer: 97115395.2
(22) Anmeldetag: 05.09.1997
(51) Int. Cl.: B60H 1/00

(54) **Kraftfahrzeug mit Latentwärmespeicher und Verfahren zum Aufladen des Latentwärmespeichers**
Motor vehicle with a heat accumulator and method for charging the heat accumulator
Véhicule à moteur à accumulateur de chaleur et procédé pour charger l'accumulateur de chaleur

(30) Priorität: 09.09.1996 DE 19636523
(43) Veröffentlichungstag der Anmeldung: 11.03.1998
(73) Patentinhaber: Continental ISAD Electronic Systems GmbH & Co. KG, 86899 Landsberg (DE)
(72) Erfinder: Zeyen, Klaus-Peter, D-50737 Köln (DE); Pels, Thomas, 46359 Heiden (DE); Revermann, Klaus, 49811 Lingen (DE); Riekenbrauck, Holger, 50733 Köln-Nippes (DE)
(74) Vertreter: Schneider, Egon

(56) Entgegenhaltungen:
- WO-A-93/02884
- US-A- 5 291 960
- US-A- 5 359 308
- US-A- 5 549 524

## Beschreibung

Die Erfindung betrifft ein Kraftfahrzeug mit einem Verbrennungsmotor, entsprechend den Merkmalen des Oberbegriffes des unabhängigen Anspruches 1. Die Erfindung betrifft ferner ein Verfahren zum Aufladen eines in einem derartigen Kraftfahrzeug befindlichen Latentwärmespeichers, entsprechend den Merkmalen des Oberbegriffes des unabhängigen Anspruches 6.

Bei Kraftfahrzeugen, die von einem Verbrennungsmotor angetrieben werden, wird der Motor durch ein flüssiges Kühlmittel gekühlt, so daß er eine kritische Temperatur nicht überschreitet. Das erhitzte Kühlmittel kann durch einen Latentwärmespeicher geführt werden und dort seine Wärme abgeben, so daß dieser aufgeladen wird. Der Latentwärmespeicher kann die aufgenommene Wärmemenge extrem lange (ca. 48 Stunden) speichern und die gespeicherte Wärmemenge kann für unterschiedliche Zwecke verwendet werden. Beispielsweise ist eine Nutzung zum Vorwärmen des Verbrennungsmotor vor dem Starten bzw. zum Vorwärmen des Kraftfahrzeuginnenraums und/oder zum Heizen des Kraftfahrzeuginnenraumes und/oder zum Vorheizen eines Katalysators etc. möglich.

Bei modernen Kraftfahrzeugen, insbesondere bei Kraftfahrzeugen, die mit modernen direkt einspritzenden Turbodieselmotoren bestückt sind, wird der indizierte Wirkungsgrad des Verbrennungsmotors immer größer, d. h., die von dem Verbrennungsmotor abgegebene Wärme immer geringer. Dieser an sich begrüßenswerte erhöhte indizierte Wirkungsgrad kann dazu führen, daß die Abwärme des Verbrennungsmotors nicht mehr ausreichend ist, um das flüssige Kühlmittel und infolgedessen den Latentwärmespeicher genügend aufzuheizen, so daß dieser seine Funktion nicht mehr zufriedenstellend erfüllt. Eine weitere Schwierigkeit ist darin zu sehen, daß das erhitzte Kühlmittel möglichst wärmeverlustfrei zu den Latentwärmespeicher geführt werden muß. Dazu muß der Latentwärmespeicher entweder möglichst nahe am Verbrennungsmotor positioniert werden, was aufgrund der Enge in den Motorräumen moderner Kraftfahrzeuge Probleme bereiten kann, oder aber es muß ein langer "Transportweg" in Kauf genommen werden, was eine aufwendige und somit teure Wärmeisolierung des Weges erfordert.

Ein Hybridfahrzeug, bei dem die Merkmale des Oberbegriffes des Vorrichtungsansprüches 1 bekannt sind, ist zum Beispiel in D1 offenbart.

Der Erfindung liegt die Aufgabe zugrunde, ein Kraftfahrzeug der eingangs genannten Art zu schaffen, bei dem sichergestellt ist, daß der Latentwärmespeicher jederzeit genügend aufladbar ist. Der Erfindung liegt ferner die Aufgabe zugrunde, ein Verfahren zu schaffen, das eine genügende Aufladung des Latentwärmespeichers jederzeit sicherstellt.

Bei einem derartigen Kraftfahrzeug wird diese Aufgabe gemäß den kennzeichnenden Merkmalen des Anspruchs 1 dadurch gelöst, daß die Antriebswelle mit einer elektrischen Maschine mechanisch gekoppelt ist, mit deren Hilfe durch elektrische Kopplung an die Antriebswelle mechanische Energie der Antriebswelle in elektrische Energie umwandelbar ist und daß die elektrische Energie dem Latentwärmespeicher zuführbar und dort zumindest zum Teil in Wärmeenergie umwandelbar ist.

Die mit der Erfindung erzielten Vorteile sind insbesondere darin zu sehen, daß die Aufladung des Latentwärmespeichers gezielt beeinflußt werden kann und somit zu jedem Zeitpunkt eine genügende Aufladung des Latentwärmespeichers sichergestellt ist. So ist es beispielsweise möglich, die elektrische Maschine bei jedem Bremsvorgang an die Antriebswelle des Kraftfahrzeuges elektrisch zu koppeln, so daß die Antriebswelle durch die elektrische Maschine generatorisch gebremst und somit der Bremsvorgang unterstützt und mechanische Energie der Antriebswelle in elektrische Energie umgewandelt wird. Im allgemeinen wird die Aufladung des Latentwärmespeichers "durch Bremsvorgänge" ausreichend sein. Sollte diese Aufladungsmöglichkeit jedoch einmal nicht ausreichend sein, z. B. bei langen Autobahnfahrten oder bei niedrigen Außentemperaturen etc., so kann die elektrische Maschine bei Bedarf gezielt an die Antriebswelle elektrisch gekoppelt werden, so daß gezielt mechanische Energie der Antriebswelle in elektrische Energie umgewandelt wird. Ein weiterer Vorteil der Erfindung ist darin zu sehen, daß sich die in der elektrischen Maschine gewonnene elektrische Energie durch geeignete Stromleitungen nahezu verlustfrei transportieren läßt. Dementsprechend können die Wege zwischen der elektrischen Maschine und dem Latentwärmespeicher "beliebig lang" sein, so daß man in der Platzwahl des Latentwärmespeichers frei ist. So kann der Latentwärmespeicher beispielsweise im Kofferraum des Kraftfahrzeuges plaziert werden, was einerseits zusätzlichen Platz für andere Aggregate im Motorraum schafft und andererseits zu einer besseren Gewichtsverteilung im Kraftfahrzeug führt.

Gemäß einer Weiterbildung der Erfindung ist die elektrische Maschine über eine elektrische Leitung, die einen niedrigen ohmschen Widerstand aufweist, mit dem Wärmespeicher verbunden und wird die elektrische Energie mit Hilfe eines Heizwiderstandes, der mit dem Latentwärmespeicher in direkter Verbindung steht, in Wärmeenergie umgewandelt. Der Vorteil dieser Weiterbildung der Erfindung ist darin zu sehen, daß ein nahezu verlustfreier Transport der elektrischen Energie von der elektrischen Maschine zu dem Latentwärmespeicher und eine effektive Umwandlung der elektrischen Energie in Wärmeenergie im Latentwärmespeicher sichergestellt ist.

Gemäß einer zusätzlichen Weiterbildung der Erfindung wird die elektrische Maschine zur Verringerung von Drehungleichförmigkeiten der Antriebswelle genutzt. Eine derartige zusätzliche Nutzung der elektrischen Maschine führt insbesondere in dem Fall, in dem die elektrische Maschine ständig mit der Antriebswelle elektrisch gekoppelt ist, zu einer "höheren Laufkultur" des Kraftfahrzeuges.

Darüber hinaus kann die elektrische Maschine zusätzlich als Starter für den Verbrennungsmotor genutzt werden, so daß auf einen separaten Starter verzichtet werden kann (die elektrische Maschine derartig zu nutzen, ist an sich bekannt, s. z. B. die noch nicht veröffentlichte deutsche Patentanmeldung mit dem Aktenzeichen 195 32 129.4).

Schließlich kann die elektrische Maschine zusätzlich als Generator für das Kraftfahrzeug verwendet werden und somit den üblichen Generator im Kraftfahrzeug ersetzen.

Zusammenfassend ist festzustellen, daß durch die Ankopplung der elektrischen Maschine an die Antriebswelle eine ausreichende Aufladung des Latentwärmespeichers stets gewährleistet ist. Dennoch wird das mechanische Leistungsvermögen bzw. Antriebsvermögen des Verbrennungsmotors, insbesondere wenn die elektrische Maschine nur bei Bremsvorgängen elektrisch an die Antriebswelle gekoppelt wird, gar nicht bzw. nur nur sehr geringfügig geschmälert.

Ein Ausführungsbeispiel und weitere Vorteile der Erfindung werden im Zusammenhang mit der nachstehenden Figur erläutert, die in systematischer Darstellung das Antriebssystem eines Kraftfahrzeuges zeigt.

Das Kraftfahrzeug verfügt über einen Verbrennungsmotor 2, dessen erzeugtes Drehmoment über eine Antriebswelle 4, eine Kupplung 10 und ein Getriebe 12 in bekannter Art und Weise auf die Antriebsräder 6 übertragen wird. Neben den genannten Elementen enthält das Antriebssystem des Kraftfahrzeuges eine elektrische Maschine 8, deren Läufer 16 direkt auf der Antriebswelle 4 des Verbrennungsmotors 2 sitzt und mit dieser drehfest gekoppelt ist. Der Ständer 14 der elektrischen Maschine 8 stützt sich hingegen vorzugsweise drehfest gegen den Verbrennungsmotor 2 bzw. gegen ein (nicht gezeigtes) Fahrzeugchassis oder ein (nicht gezeigtes) Kupplungsgehäuse ab.

Mit Hilfe der elektrischen Maschine 8 kann durch elektrische Kopplung der elektrischen Maschine 8 an die Antriebswelle 4 - z. B. bei einem Bremsvorgang des Kraftfahrzeuges oder ständig - Rotationsenergie der Antriebswelle 4 in elektrische Energie umgewandelt werden. Die gewonnene elektrische Energie wird über eine elektrisch leitende Verbindung 20 dem Latentwärmespeicher 18 zugeführt und dort mit Hilfe eines (nicht gezeigten) Heizwiderstandes in Wärme umgewandelt, die in dem Latentwärmespeicher gespeichert wird. Im Bedarfsfall kann die dem Latentwärmespeicher 18 gespeicherte Wärme an Nebenverbraucher 22, z. B. an eine Heizung für den Fahrzeuginnenraum bzw. an eine Heizung zum Vorheizen des Verbrennungsmotors 2 etc., abgegeben werden.

Zusätzlich zu dem Latentwärmespeicher 18 können andere Speicher vorhanden sein, die im Bedarfsfall von der elektrischen Maschine 8 "aufgefüllt" werden können. Darüber hinaus kann die elektrische Maschine 8 in an sich bekannter Art und Weise zur Verringerung von Drehungleichförmigkeiten der Antriebswelle 4 und als Starter für den Verbrennungsmotor 2 etc. genutzt werden (bzgl. der genauen Ausgestaltung und bzgl. der weiteren Nutzungsmöglichkeiten der elektrischen Maschine 8 sei nochmals auf die unveröffentlichte deutsche Patentanmeldung mit dem Aktenzeichen 195 32 129.4 hingewiesen).

### Bezugszeichenliste

- 2: Verbrennungsmotor
- 4: Antriebswelle
- 6: Antriebsräder
- 8: elektrische Maschine
- 10: Kupplung
- 12: Getriebe
- 14: Ständer
- 16: Läufer
- 18: Latentwärmespeicher
- 20: Leitende elektrische Verbindung zwischen elektrischer Maschine und Latentwärmespeicher
- 22: Nebenverbraucher

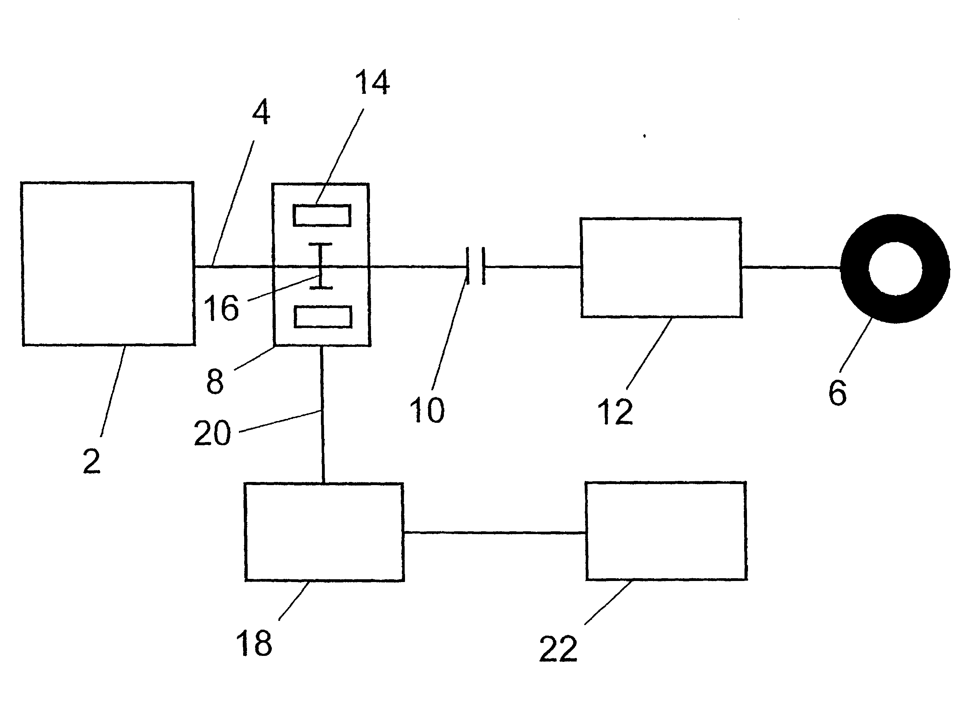

## Patentansprüche

1. Kraftfahrzeug mit einem Verbrennungsmotor (2), der das Kraftfahrzeug über eine Antriebswelle (4) antreibt, die mit einer elektrischen Maschine (8) mechanisch gekoppelt ist, mit Hilfe der durch elektrische Kopplung der elektrischen Maschine (8) an die Antriebswelle (4) mechanische Energie der Antriebswelle (4) in elektrische Energie umwandelbar ist und mindestens einem Latentwärmespeicher (18), der durch in Betrieb des Kraftfahrzeuges entstehende Wärme ladbar ist,
**dadurch gekennzeichnet,**
**daß**
- die elektrische Energie dem Latentwärmespeicher (18) zuführbar und dort zumindest zum Teil in Wärmeenergie umwandelbar ist.

2. Kraftfahrzeug nach Anspruch 1, **dadurch gekennzeichnet, daß** die elektrische Maschine (8) über eine elektrisch leitende Verbindung (20) mit einem niedrigen ohmschen Widerstand mit dem Wärmespeicher (18) verbunden ist und daß die elektrische Energie mit Hilfe eines Heizwiderstandes in Wärmeenergie umwandelbar ist, der mit dem Latentwärmespeicher (18) in direkter Verbindung steht.

3. Kraftfahrzeug nach einem der Ansprüche 1 bis 2, **dadurch gekennzeichnet, daß** die elektrische Maschine (8) zur Verringerung von Drehungleichförmigkeiten genutzt wird.

4. Kraftfahrzeug nach einem der Ansprüche 1 bis 3, **dadurch gekennzeichnet, daß** die elektrische Maschine (8) als Starter für den Verbrennungsmotor (2) genutzt wird.

5. Kraftfahrzeug nach einem der Ansprüche 1 bis 4, **dadurch gekennzeichnet, daß** die elektrische Maschine (8) als Generator genutzt wird

6. Verfahren zum Aufladen eines in einem Kraftfahrzeug befindlichen Latentwärmespeichers (18), wobei das Kraftfahrzeug über einen Verbrennungsmotor (2) der das Kraftfahrzeug über eine Antriebswelle (4) antreibt, und zusätzlich über eine elektrische Maschine (8), die zumindest zeitweise elektrisch an die Antriebswelle (4) gekoppelt und dann zumAbbremsen der Antriebswelle (4) genutzt wird, so daß mechanische Energie in elektrische Energie umgewandelt wird, verfügt, **dadurch gekennzeichnet, daß**
- die elektrische Energie dem Latentwärmespeicher (18) zugeführt und dort zumindest zum Teil in Wärmeenergie umgewandelt wird.

7. Verfahren zum Aufladen eines in einem Kraftfahrzeug befindlichen Latentwärmespeichers (18) nach Anspruch 6, **dadurch gekennzeichnet, daß** die elektrische Maschine (8) ständig elektrisch an die Antriebswelle (4) gekoppelt ist und zusätzlich zur Verringerung von Drehungleichförmigkeiten der Antriebswelle (4) genutzt wird.

## Claims

1. Automotive vehicle, having an internal combustion engine (2) which drives the automotive vehicle via a drive shaft (4), which is mechanically connected to an electric motor (8), by means of which mechanical energy of the drive shaft (4) is convertible into electrical energy by an electrical connection between the electric motor (8) and the drive shaft (4), and having at least one latent heat accumulator (18), which is chargeable by heat produced during operation of the automotive vehicle, **characterised in that**
- the electrical energy can be supplied to the latent heat accumulator (18), and at least some can be converted there into thermal energy.

2. Automotive vehicle according to claim 1, **characterised in that** the electric motor (8) is connected to the heat accumulator (18) via an electrically conductive connection (20) having a low ohmic resistance, and **in that** the electrical energy is convertible into thermal energy by means of a heating resistor which is directly connected to the latent heat accumulator (18).

3. Automotive vehicle according to one of claims 1 to 2, **characterised in that** the electric motor (8) is used to reduce rotary irregularities.

4. Automotive vehicle according to one of claims 1 to 3, **characterised in that** the electric motor (8) is used as a starter for the internal combustion engine (2).

5. Automotive vehicle according to one of claims 1 to 4, **characterised in that** the electric motor (8) is used as a generator.

6. Method of charging a latent heat accumulator (18) which is situated in an automotive vehicle, the automotive vehicle having an internal combustion engine (2) which drives the automotive vehicle via a drive shaft (4), and additionally having an electric motor (8) which is connected electrically to the drive shaft (4), at least temporarily, and is then used to retard the drive shaft (4), so that mechanical energy is converted into electrical energy, **characterised in that**
- the electrical energy is supplied to the latent heat accumulator (18), and at least some is converted there into thermal energy.

7. Method of charging a latent heat accumulator (18), which is situated in an automotive vehicle, according to claim 6, **characterised in that** the electric motor (8) is constantly connected electrically to the drive shaft (4) and is additionally used to reduce rotary irregularities of the drive shaft (4).

## Revendications

1. Véhicule automobile comprenant un moteur à combustion interne (2) qui entraîne le véhicule automobile par l'intermédiaire d'un arbre de transmission d'entraînement (4), qui pour sa part est couplé mécaniquement à une machine électrique (8) à l'aide de laquelle, par couplage électrique de la machine électrique (8) à l'arbre de transmission d'entraînement (4), de l'énergie mécanique de l'arbre de transmission d'entraînement (4) peut être convertie en énergie électrique, le véhicule comprenant également au moins un accumulateur de chaleur latente (18), qui peut être chargé par de la chaleur produite lors du fonctionnement du véhicule automobile,
**caractérisé en ce que** l'énergie électrique peut être transmise à l'accumulateur de chaleur latente (18) et y être convertie, au moins en partie, en énergie calorifique.

2. Véhicule automobile selon la revendication 1, **caractérisé en ce que** la machine électrique (8) est reliée à l'accumulateur de chaleur (18) par l'intermédiaire d'une liaison électrique (20) à faible résistance ohmique, et **en ce que** l'énergie électrique peut être convertie en énergie calorifique à l'aide d'une résistance de chauffage qui est en liaison directe avec l'accumulateur de chaleur latente (18).

3. Véhicule automobile selon l'une des revendications 1 à 2, **caractérisé en ce que** la machine électrique (8) est utilisée pour réduire des irrégularités de rotation.

4. Véhicule automobile selon l'une des revendications 1 à 3, **caractérisé en ce que** la machine électrique (8) est utilisée en tant que démarreur pour le moteur à combustion interne (2).

5. Véhicule automobile selon l'une des revendications 1 à 4, **caractérisé en ce que** la machine électrique (8) est utilisée en tant que générateur.

6. Procédé destiné à charger un accumulateur de chaleur latente (18) se trouvant dans un véhicule automobile, le véhicule automobile disposant d'un moteur à combustion interne (2) qui entraîne le véhicule automobile par l'intermédiaire d'un arbre de transmission d'entraînement (4), et, en outre, d'une machine électrique (8) qui est couplée électriquement, au moins par moments, à l'arbre de transmission d'entraînement (4), et qui est alors utilisée pour freiner l'arbre de transmission d'entraînement (4), de sorte que de l'énergie mécanique est convertie en énergie électrique, **caractérisé en ce que** l'énergie électrique est transmise à l'accumulateur de chaleur latente (18) et y est convertie, au moins en partie, en énergie calorifique.

7. Procédé destiné à charger un accumulateur de chaleur latente (18) se trouvant dans un véhicule automobile, selon la revendication 6, **caractérisé en ce que** la machine électrique (8) est couplée constamment, sur le plan électrique, à l'arbre de transmission d'entraînement (4), et est utilisée en supplément pour réduire les irrégularités de rotation de l'arbre de transmission d'entraînement (4).
